# EUROPEAN PATENT APPLICATION

(11) **EP 4 796 268 A1**
(43) Date of publication of application: **26.08.2026**
(21) Application number: 25217613.6
(22) Date of filing: 21.11.2025
(51) Int. Cl.: B25J 9/16, G05B 19/4065

(54) **SYSTEMS AND METHODS FOR DETECTING AND CLASSIFYING DEFECTS OF TOOLS**

(30) Priority: 24.02.2025 US 202519061583
(71) Applicant: The Boeing Company, Arlington, VA 22202 (US)
(72) Inventor: BLANCO DEL ALAMO, José Antonio, Arlington (US); YAKEL, Seth Albert, Arlington (US); SINGH, Victor, Arlington (US); STRAIT, Alexander Keith, Arlington (US); BARTL, Andreas, Arlington (US)
(74) Representative: St Clair Jones, Gregory Arthur Langley

(57) **Abstract**

A system and a method include a control unit configured to receive one or more force signals from one or more force sensors coupled to one or both of a tool or an end effector. The one or more force signals are indicative of one or more forces exerted in relation to the tool or the end effector as the tool operates on one or more components. The control unit is further configured to classify a status of an operative portion of the tool based on the one or more forces. The control unit can be further configured predict a remaining life of the operative portion based on the one or more forces.

## Description

### FIELD OF THE DISCLOSURE

Examples of the present disclosure generally relate to systems and methods for detecting and classifying defects of tools, such as drills.

### BACKGROUND OF THE DISCLOSURE

During a manufacturing process, various components can be coupled together. Different components can be coupled together, and operated on by a tool. As an example, during a manufacturing process of an aircraft, outer skin portions of wings are secured to spars, ribs, or the like.

A defect in a tool, such as a drill, can cause significant delays and added expense to a manufacturing process. For example, a defective tool, such as a drill having a bit with multiple chips, can form an anomalous hole in a carbon fiber panel. The panel may then not be suitable for use, which then leads to increased costs and time, as such panel is significantly reworked, or scrapped, and a new drilling process is operated with a replacement panel. As a specific example, during robot-assisted assembly wing of a commercial aircraft, defective drill bits can lead to anomalous holes (for example, large burrs, undesirable surface roughness, hole offsets, oval holes, chatter, etc.), as well as increased costs due to tool breakage and rework.

Due to the potential of tool defects, inspection of hole quality is required. For example, manual inspection of holes after every fifty linear inches are performed to determine heights of burrs in relation to the drilled holes. Typically, current inspections are based on traditional qualification tests (and/or manual observations and experience) to define thresholds for tools life, but do not utilize any in-process monitoring. As can be appreciated, such periodic inspections can impact manufacturing flow. In particular, each inspection interrupts automated manufacturing every 10-15 minutes to ensure that the tool maintains effectiveness and quality.

### SUMMARY OF THE DISCLOSURE

A need exists for an efficient, effective, and accurate system and method for detecting quality of a tool, such as a drill, during a manufacturing process. With that need in mind, certain examples of the present disclosure provide a system including a control unit configured to receive one or more force signals from one or more force sensors coupled to one or both of a tool or an end effector. The one or more force signals are indicative of one or more forces exerted in relation to the tool or the end effector as the tool operates on one or more components. The control unit is further configured to classify a status of an operative portion of the tool based on the one or more forces. In at least one example, the control unit is further configured to predict a remaining life of the operative portion based on the one or more forces.

In at least one example, the system includes one or both of the tool or the end effector. In at least one example, the tool is a drill.

In at least one example, the control unit is further configured to train a machine learning model based on force data stored within a memory. The control unit can be further configured to classify the status of the operative portion of the tool by using the machine learning model. The control unit can be further configured to refine the machine learning model based on the one or more signals received from the one or more force sensors.

In at least one example, the control unit is an artificial intelligence or machine learning system. In at least one example, the control unit includes an artificial neural network.

The system can also include a user interface having a display. The control unit is further configured to show information regarding the status of the operative portion on the display.

Certain examples of the present disclosure provide a method including receiving, by a control unit, one or more force signals from one or more force sensors coupled to one or both of a tool or an end effector, wherein the one or more force signals are indicative of one or more forces exerted in relation to the tool or the end effector as the tool operates on one or more components; and classifying, by the control unit, a status of an operative portion of the tool based on the one or more forces. In at least one example, the method also includes predicting, by the control unit, a remaining life of the operative portion based on the one or more forces.

### BRIEF DESCRIPTION OF THE DRAWINGS

Figure 1 illustrates a simplified block diagram of a system, according to an example of the present disclosure.
Figure 2 illustrates charts of force data, according to an example of the present disclosure.
Figure 3 illustrates a flow chart of a method, according to an example of the present disclosure.
Figure 4 illustrates a schematic block diagram of a control unit, according to an example of the present disclosure.
Figure 5 illustrates a perspective bottom view of an end effector, according to an example of the present disclosure.
Figure 6 illustrates a perspective internal view of the end effector of Figure 4.
Figure 7 illustrates a perspective front view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As described herein, examples of the present disclosure provide systems and methods that measure and record physical drilling properties at a high sample rate during operation of a tool, such as during a drilling process. Such data is used to train a neural network to detect, predict, and classify defects of tools based upon input data from the sensors. The systems and methods described herein allow for highly efficient and effective manufacturing, as well as increased sustainability through first pass quality, reduced confined space work, and fully automated operations without manual quality checks.

In at least one example, the systems and methods described herein automate identification of quality issues and cutting tool defects in the manufacturing process by using in-process measurements. Such automated in-process defect detection reduces rework, extends drill life, and reduces manufacturing flow time. In at least one example, a control unit analyzes in-process measurements to infer defects of tools, and determine a health status of a tool by using signals from the sensors to extract specific features representative of the health of the tool as compared to a new tool. In at least one example, a machine learning regression and classification algorithm is trained to extrapolate detection capabilities based upon input data from the sensors (for example, drill bit chipping and burr height), and from minor to major defects before a tool breaks.

The control unit receives and analyzes signals from the sensors to extract specific features representative of how healthy a tool is in relation to a perfect, fresh new tool. Further, the control unit uses a machine learning regression and classification algorithm, which is trained to extrapolate detection capabilities to new applications (for example, new cutting tools, new holes sizes, different stacks, etc.).

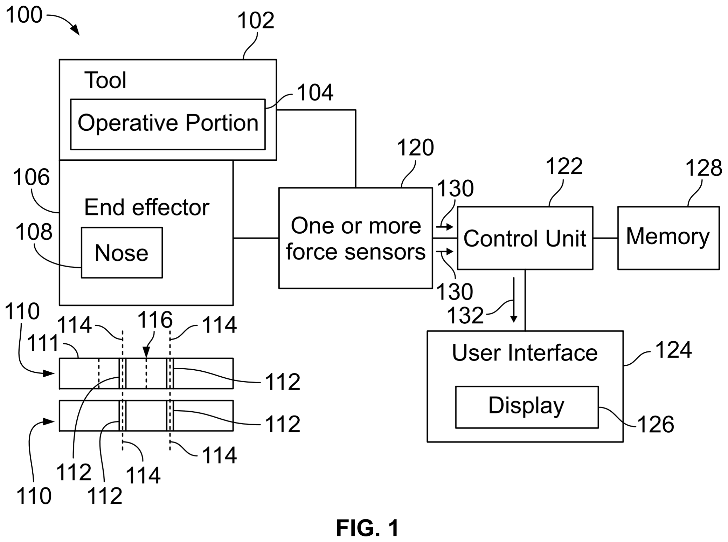

Figure 1 illustrates a simplified block diagram of a system 100, according to an example of the present disclosure. The system 100 includes a tool 102 having an operative portion 104. As an example, the tool 102 is a drill, and the operative portion 104 is a drill bit coupled to a spindle. As another example, the tool 102 is a saw, and the operative portion 104 is a blade. As another example, the tool 102 is a stamping device, and the operative portion 104 is a stamping press. As another example, the tool 102 is a laser forming device, such as a laser cutting device, and the operative portion 104 is a laser beam.

The tool 102 can be operatively coupled to an end effector 106 having a nose 108 (for example, a pressure foot). As an example, the operative portion 104 of the tool 102 is configured to fit into and through the nose 108 to operate on one or more components 110. Optionally, the system 100 may not include the end effector 106. Instead, the tool 102 can be configured to operate on the component(s) 110 without the end effector 106.

The tool 102 is configured to operate on one or more components 110. For example, two components 110 can be aligned with one another. The components 110 can be secured together through fasteners. Each component 110 can include one or more alignment holes 112, such as pilot holes. The alignment holes 112 are used to provide locations for the tool 102 to form expanded holes 116. For example, the operative portion 104 of the tool 102 is configured to be axially aligned with a central longitudinal axis 114 of each alignment hole 112. After alignment, the tool 102 is operated so that the operative portion 104 engages the component 110 around the central longitudinal axis 114 to cut into the material of the component 110 surrounding the alignment hole 112 to form an expanded hole 116 that is configured to receive a fastener, which can be used to secure the component 110 to another structure, such as another component 110.

Optionally, the component(s) 110 may not include the alignment holes 112. Instead, the tool 102 is configured to operate to form a hole (for example, the expanded hole 116) directly into the component(s) 110 without the use of an alignment hole.

Each component 110 can be a panel, block, wall, sheet, bracket, connector, or the like. In at least one example, a first component 110 can be a skin of a wing of an aircraft being manufactured, and a second component can be a shear tie to which the skin is to be secured.

In order to detect a status (such as a health status, quality, or the like) of the operative portion 104 of the tool 102, one or more force sensors 120 are coupled to one or both of the tool 102, and/or the end effector 106. For example, the sensors 120 are used during operation of the tool 102 to determine a health status of the operative portion 104. Examples of the health status include: (a) fully intact and free of defects, (b) a defect such as a chip, (c) multiple defects, such as two or more chips, and the like.

In at least one example, a force sensor 120 is coupled to one of the tool 102 or the end effector 106. As another example, a first force sensor 120 is coupled to the tool 102, and a second force sensor 120 is coupled to the end effector 106. The force sensor(s) 120 are configured to detect forces exerted during operation of the tool 102. Examples of the force sensor(s) 120 include load cells, pneumatic load cells, capacitive load cells, strain gages, hydraulic load cells, transducers, and the like. As another example, a force sensor 120 can be coupled to a spindle that is attached to a drill. In this example, the force sensor 120 detects drilling process data, such as torque applied to a component being drilled.

A control unit 122 is in communication with the force sensor(s) 120, such as through one or more wired or wireless connections. The control unit 122 receives force signals 130 indicative of detected forces from the force sensor(s) 120. In at least one example, the control unit 122 can also be in communication with the tool 102 and configured to control operation of the tool 102. Optionally, the control unit 122 is not configured to control operation of the tool 102.

In at least one example, the control unit 122 is also in communication with a user interface 124, which includes a display 126, such as through one or more wired or wireless connections. The user interface 124 can be part of a computer workstation, a handheld device (such as a smart phone or tablet), or the like. The display 126 can be an electronic monitor, a digital display, or the like. As described herein, the control unit 122 can be configured to show information regarding the status of the tool 102, such as a status of the operative portion 104 on the display 126.

The control unit 122 is also in communication with a memory 128, such as through one or more wired or wireless connections. The memory 128 can be separate and distinct from the control unit 122. Optionally, the memory 128 can be part of the control unit 122. The memory 128 stores data regarding the component(s) 110, operational characteristics of the tool 102, and/or the like. For example, the memory 128 stores data regarding the materials of the component(s) 110. As another example, the memory 128 stores data regarding the forces exerted on an operative portion of a tool at various stages of health status. As another example, the memory 128 stores force data, which can be predetermined. Examples of the force data include a force vector, a force magnitude, patterns, models, trends, and/or the like regarding force(s).

Each material can be characterized by a specific operating force (such as drilling, cutting, or the like), which is used to compute operating forces in models stored in memory. The specific operating force as a material property can be restored from the actual measured operating force, thrust force, motor torque, and/or the like.

In at least one example, the nose 108 abuts into a surface 111 of a component 110. The tool 102 can couple to the end effector 106 such that the operative portion 104 extends through the nose 108 and engages the component 110. The tool 102 provides a tool-operating operation in relation to the component(s) 110. Examples of the tool-operating operation include drilling, cutting, stamping, laser forming, and/or the like.

As the tool 102 operates on the component(s) 110, the force sensor(s) 120 detect forces exerted by the tool 102 and/or on the component(s) 110. For example, the force sensor(s) 120 can detect thrust force exerted by the tool 102 on component(s) 110. As another example, the force sensor(s) 120 can detect torque exerted by, a bending moment of, and/or a radial displacement of the tool 102.

In at least one example, the memory 128 stores predetermined force data (such as force vector(s), force magnitude(s), pattern(s), force model(s), force trend(s), and/or the like) associated with the tool 102 operating on the component 110. For example, the tool 102 can be a drill, and the operative portion 104 is a drill bit that is configured to pass into the hole 112 and/or form the hole 116.

In at least one example, the control unit 122 is configured to operate via machine learning to classify a status of the operative portion 104 of the tool 102. For example, data is initially collected regarding one or more forces associated with an operative portion 104 at various stages of health. In particular, a first set of force data associated with a defect-free (for example, a new, intact) operative portion 104 is stored within the memory 128. Further, a second set of force data associated with a first defect magnitude (for example, one chip formed on the operative portion 104) is also stored within the memory 128. Next, a third set of force data associated with a second defect magnitude (for example, two chips formed on the operation portion 104) is also stored within the memory 128, and so on. That is, the memory 128 stores force data for a range of health status of the operative portion 104. In at least one example, the range of health status is from a defect-free operative portion 104 to a fully-defective operative portion 104 which is unable to operate on a component.

During operation of the tool 102, the one or more force sensors 120 detect one or more forces exerted on the operative portion 104 and/or on the component(s) 110 by the operative portion 104. The control unit 122 receives the force signals 130 indicative of the force(s) during operation of the tool 102 in real time. The control unit 122 then compares the force(s) (as detected by the force sensor(s) 120 and received via the force signals 130) with the data stored in the memory 128 to determine the status of the operative portion 104. In at least one example, the control unit 122 determines the status of the operative portion 104 if the force(s) detected by force sensor(s) 120 match a data set within the memory 128.

As an example, if the force(s) match the first set of force data associated with a defect-free operative portion 104, the control unit 122 determines that the operative portion 104, which is currently operating on the component(s) 110, is defect free. The control unit 122 then outputs a status signal 132 to the user interface 124. The status signal 132 indicates the current, real time status of the operative portion 104. The status of the operative portion 104, as included within the status signal 132, is then shown on the display 126. In this manner, the control unit 122 operates the display 126 to show the current status of the operative portion 104.

As another example, if the force(s) match the second set of force data of force data associated with a first defect magnitude (for example, one chip formed on the operative portion 104), the control unit 122 determines that the operative portion 104, which is currently operating on the component(s) 110, has at least one defect, such as one chip. The control unit 122 then outputs the status signal 132, associated with the current status, to the user interface 124.

As another example, if the force(s) match the third set of force data associated with a second defect magnitude (for example, two chips formed on the operation portion 104) ), the control unit 122 determines that the operative portion 104, which is currently operating on the component(s) 110, has two or more defects, such as two chips. The control unit 122 then outputs the status signal 132, associated with the current status, to the user interface 124.

As noted, the control unit 122 is able to classify a status of the operative portion 104 in real time during actual operation of the tool 102 by comparing one or more force(s) detected by the one or more sensors 120 with force data stored in the memory 128. As can be appreciated, the detected force(s) may not match particular force data stored within the memory 128. As such, the control unit 122 uses machine learning, which is trained on the force data stored within the memory 128, to determine status that may not be specifically stored in the memory 128. For example, the force signals 130 received form the force sensor(s) 120 can be at one or more magnitudes between the first set of force data and the second set of force data. The control unit 122 analyzes the force data within the force signals 130 in relation to the stored force data in the memory 128 to determine a current health status between the levels of stored force data, and a rate at which the detected forces change over time (such as during operation of the tool 102). Based on the detected forces, and the rate of change over time (for example, a trend), the control unit 122 predicts how long the operative portion 104 can continue to operate before reaching a particular status stored within the memory 128. The control unit 122 then outputs a signal 132 to the user interface 124, which then shows the prediction regarding the amount of operative life remaining (until reaching one or more health status levels, such as a single defect, multiple defects, inoperability, and/or the like) on the display 126.

In at least one example, the control unit 122 trains a machine learning model based on the data sets stored in the memory 128. Upon receiving new force sensor data from the one or more sensors 120, and classifying a health status of the operative portion 104 based on such received data, the control unit 122 further refines health status classification. For example, the newly received data can represent a different health status than those previously stored as a training set of data within the memory 128, and is then used as another data set for future training of the machine learning model. As such, the training and learning of the machine learning model is an iterative process having precision and accuracy that increases over time. The control unit 122 uses the machine learning model to classify health status of the operative portion 104, as well as predict operational integrity of the operative portion 104.

As described herein, the control unit 122 is configured to monitor operation of the tool 102 in real-time to determine a current, real-time status of the operative portion 104, and predict remaining useful life of the operative portion 104. As such, the system 100 does not require interruption of a manufacturing process (that is, operation of the tool 102 on the component(s) 110) to investigate the operative portion 104 to determine a status thereof. In this manner, the systems and methods described herein allow for a manufacturing process of increased efficiency, and which produces less waste (for example, by determining a real-time status, the operative portion 104 can be readily replaced before becoming defective, thereby eliminating, minimizing, or otherwise reducing a potential of a defect component).

As described herein, the system 100 includes the control unit 122, which receives one or more force signals 130 from one or more force sensors 120 coupled to one or both of the tool 102 or the end effector 106. The one or more force signals 130 are indicative of one or more forces exerted in relation to the tool 102 or the end effector 106 as the tool operates on one or more components 110. The control unit 122 is further configured to classify a status of an operative portion 104 of the tool 102 based on the one or more forces. In at least one example, the control unit 122 if is further configured to predict a remaining life of the operative portion 104 based on the one or more forces. In at least one example, the control unit 122 is further configured to train a machine learning model based on force data stored within the memory 128. The control unit 122 is further configured to classify the status of the operative portion 104 of the tool 102 by using the machine learning model.

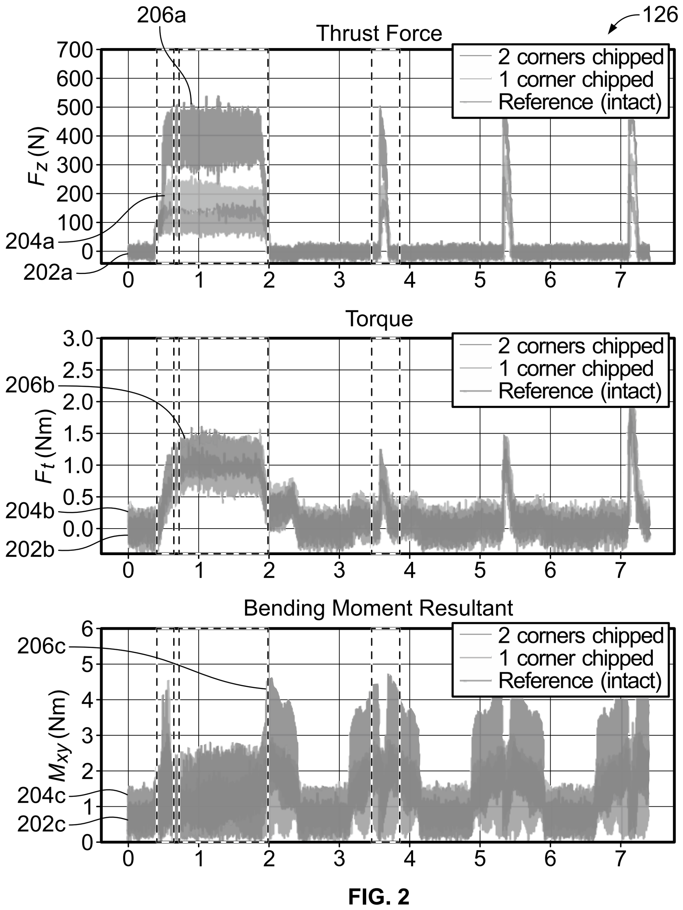

Figure 2 illustrates charts of force data, according to an example of the present disclosure. Referring to Figures 1 and 2, the control unit 122 can show the force data on the display 126, for example. Optionally, the control unit 122 may not show the force data on the display 126. The force sensor(s) 120 are configured to detect one or more forces during operation of the tool 102 on the component(s) 110. For example, the force sensor(s) 120 can detect thrust force of the operative portion 104 into the component(s) 110, torque of the operative portion 104, and a bending moment of the operative portion 104. In at least one example, the memory 128 stores: a first set of force data 202a, 202b, and 202c associated with thrust force, torque, and bending moment, respectively, of a defect-free (for example, a new, intact) operative portion 104; a second set of force data 204a, 204b, and 204c associated with thrust force, torque, and bending moment, respectively, of an operative portion 104 having one defect, such as one chip; and a third set of force data 206a, 206b, and 206c associated with thrust force, torque, and bending moment, respectively, of an operative portion having multiple defects, such as two chips. The chips can be formed on corners of a drill bit, for example.

It has been found that bending moment of the operative portion 104 (such as a drill bit) provides a reliable indicator for health status of the operative portion. As an example, with respect to a defect-free, intact operative portion 104, there is no peak in bending moment when the operative portion 104 enters into the component 110. In contrast, when a defect, such as one corner of the operative portion 104 being chipped, is present, there is generally no negative effect on a quality of a formed hole within the component(s) 110. However, the defect is detectable as a peak in bending moment as the operative portion 104 enters the component(s) 110. Such a defect causes increased forces on a second corner of the operative portion 104, and the operative portion 104 will wear and form holes of reduced quality with repeated use (such as over 5, 10, 15, or more drilled holes). Further, when two defects (such as two corner chips) are present, such multiple defects noticeably impact hole quality, such as by increasing a height of a burr in relation to a formed hole.

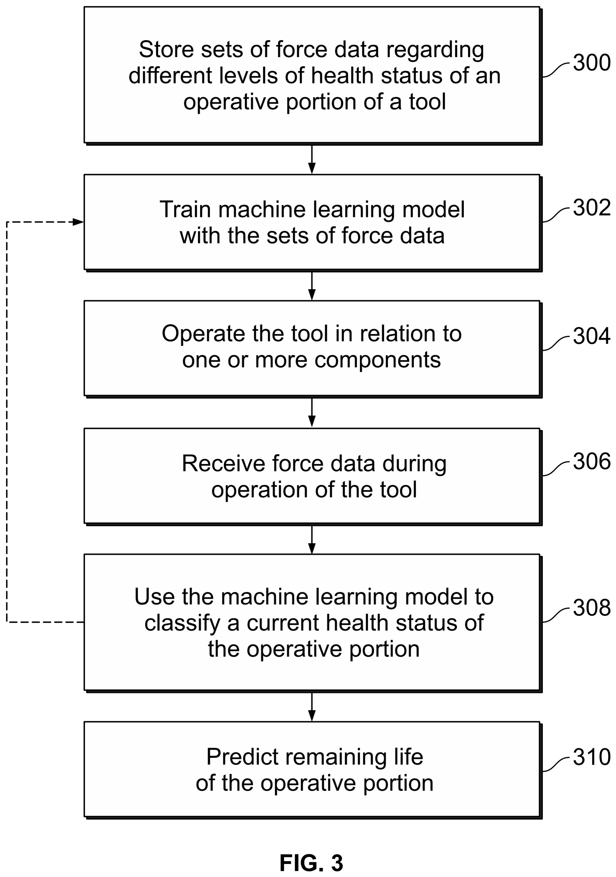

Figure 3 illustrates a flow chart of a method, according to an example of the present disclosure. Referring to Figures 1 and 3, at 300, sets of force data regarding different levels of health status of an operative portion 104 of a tool 102 are stored with the memory 128. At 302, the control unit 122 trains a machine learning model with the sets of the force data. For example, the control unit 122 trains the machine leaning model to determine the different levels of the health status based on the stored data, as well as interpolate levels of health between the stored sets, such as by determining rates of change, trends, and/or the like.

At 304, the tool 102 is operated in relation to the one or more components 110. For example, the tool 102 is operated to form holes in the component(s) 110 with the operative portion 104.

At 306, during actual, real-time operation of the tool 102, the control unit receives force data, via the force signals 130, as output by the force sensor(s) 120, which detect one or more forces in relation to (for example, forces exerted by and/or into the operative portion 104, forces exerted into the component(s) 110 by the operative portion 104, forces exerted into the operative portion 104 by the component(s) 110, and/or the like) the operative portion 104 of the tool 102.

At 308, the control unit 122 uses the machine learning model to classify a current health status of the operative portion based on the forces detected by the force sensor(s) 120 during actual, real-time operation of the tool 102. The method can then utilize such information to further refine the machine learning model at 302.

At 310, the control unit 122 then predicts the remaining life of the operative portion 104 based on a current status of the operative portion 104, and detected changes over time of detected forces during operation of the tool 102. Optionally, the method may not include 310.

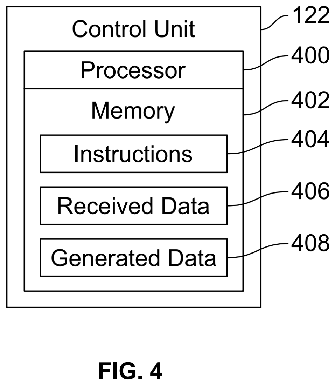

Figure 4 illustrates a schematic block diagram of the control unit 122, according to an example of the present disclosure. In at least one example, the control unit 122 includes at least one processor 400 in communication with a memory 402. The memory 402 stores instructions 404, received data 406, and generated data 408. The control unit 122 shown in Figure 4 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 122 may be or include one or more processors that are configured to control operation, as described herein.

The control unit 122 is configured to execute a set of instructions that are stored in one or more data storage units or elements (such as one or more memories), in order to process data. For example, the control unit 122 may include or be coupled to one or more memories. The data storage units may also store data or other information as desired or needed. The data storage units may be in the form of an information source or a physical memory element within a processing machine.

The set of instructions may include various commands that instruct the control unit 122 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 122. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 122 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

In at least one example, all or part of the systems and methods described herein may be or otherwise include an artificial intelligence (AI) or machine-learning system that can automatically perform the operations of the methods also described herein. For example, the control unit 122 can be an artificial intelligence or machine learning system. In at least one example, the control unit 122, as an AI or machine learning system, can automatically classify the force data described herein, instead of (or in addition to) relying on predetermined force data, and/or automatically predict remaining life of an operative portion of a tool. These types of systems may be trained from outside information and/or self-trained to repeatedly improve the accuracy with how data is analyzed to determine a health status of an operative portion of a tool and/or predict its remaining life. Over time, these systems can improve by determining shape, force data, and/or the like with increasing accuracy and speed, thereby significantly reducing the likelihood of any potential errors. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), or the like. The systems may be trained and re-trained using feedback from one or more prior analyses of the data received from the force sensor(s) 120. Based on this feedback, the systems may be trained by adjusting one or more parameters, weights, rules, criteria, or the like, used in the analysis of the same. This process can be performed using the data instead of training data, and may be repeated many times to repeatedly improve the determination of the status and remaining life of the operative portion of the tool. The training minimizes conflicts and interference by performing an iterative training algorithm, in which the systems are retrained with an updated set of data and based on the feedback examined prior to the most recent training of the systems. This provides a robust analysis model that can better determine the status of operative portions of tools.

In one example, the control unit 122 includes or represents an artificial neural network (ANN) that identifies patterns in the visual representations of data, classifies the patterns (e.g., assigns a class to an identified pattern, such as class #1, class #2, and so on) based on the contents of the patterns that are identified. Usage of a specially trained ANN rds in this way provides improvements over traditional methods of determining classifications, including more accurate determination of a status of an operative portion in real-time. The ANN can be realized through software, hardware, or a combination of software and hardware. The structure of the ANN can be a series of layers, with each layer including one or more artificial neurons arranged in one or more neuron arrays. Each of these neurons may include or represent a register, a microprocessor, and at least one input. Each neuron can produce an output, or activation, based on an activation function that uses the outputs of the previous layer and a set of weights as inputs. Each neuron in a neuron array can be connected to another neuron in the same layer or in another layer via one or more synaptic circuits. A synaptic circuit may include a memory for storing a synaptic weight. One example of this ANN may be a deep neural network having an input layer, an output layer, and a plurality of fully connected hidden layers. In some examples, the ANN (e.g., the control unit 122) can be implemented by an application-specific integrated circuit (ASIC) specially customized for the specific artificial intelligence application described herein and provide superior computing capabilities and reduced electricity consumption compared to traditional computers.

Training data can be generated by receiving continuous data at the control unit 122 and using the control unit 122 to discretize the continuous data. Optionally, the control unit 122 can be trained with a pretrained model. The training data or pretrained model may be received by the control unit 122 remotely over one or more networks. The training data may be historical data, which the neural network can use to learn patterns in the received data to identify or detect the same (or similar) patterns in other data. The trained ANN monitors additional visual representations of data to identify patterns and classify the patterns. If the trained ANN detects one or more patterns, the trained ANN can classify the pattern(s) to generate classification data which can be output to a user and/or used to re-train the ANN.

The ANN of the control unit 122 can continue to learn to improve identification of patterns in data visualizations, as well as improve the classification of the identified patterns. This continued learning can occur by, for example, changing the output generated by one or more of the neurons responsive to receiving the same input (e.g., a neuron produces a different output after the change), changing the activation function of one or more neurons, changing one or more of the weights, and/or changing one or more of the connections between the neurons (or which neurons are connected with each other). Changing one or more of these factors can cause the ANN to produce a different output (e.g., a different pattern is identified and/or a different classification is selected) than prior to the change.

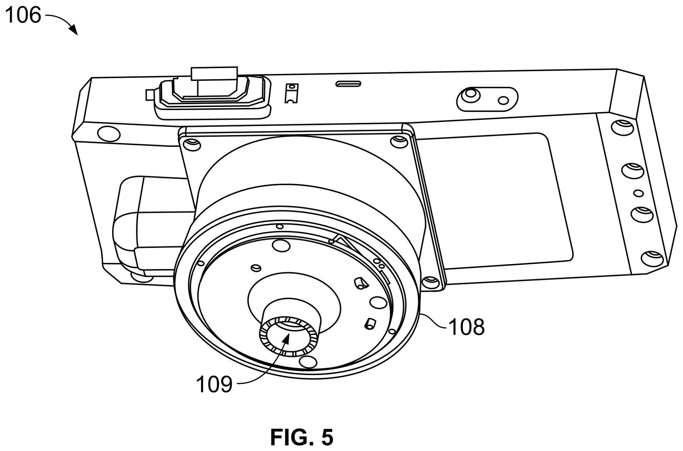

Figure 5 illustrates a perspective bottom view of an end effector 106, according to an example of the present disclosure. The nose 108 is configured to abut against a surface 111 of a component 110 (shown in Figure 1). For example, the nose 108 is configured to clamp normal to the surface 111. The nose 108 includes an opening 109 that leads to a passage through which the operative portion 104 (such as a drill bit) of the tool 102 (shown in Figure 1) passes.

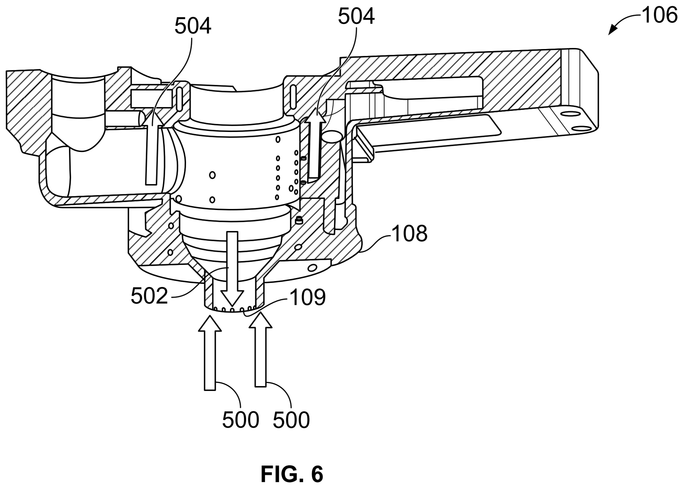

Figure 6 illustrates a perspective internal view of the end effector 106 of Figure 5. Referring to Figures 1 and 6, a force sensor 120 coupled to the end effector 106 can be a load cell, which is configured to detect a force, such as clamp load 500 exerted into the nose 108 by the component 110. The force sensor 120, another force sensor, and/or a force sensor coupled to the tool 102 detects a force, such as drill thrust force 502, exerted by the tool 102. The control unit 122 can then determine a measured force 504, such as measured load, by subtracting the drill thrust force 502 from the clamp load 500.

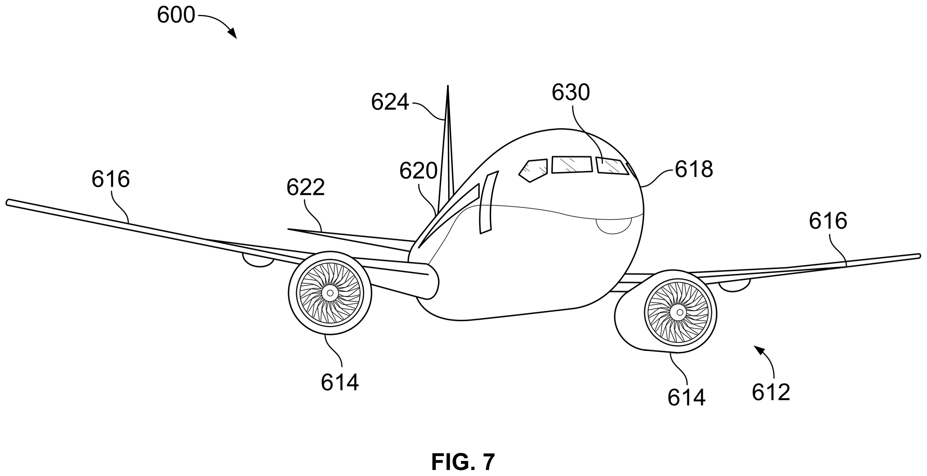

Figure 7 illustrates a perspective front view of an aircraft 600, according to an example of the present disclosure. The aircraft 600 includes a propulsion system 612 that includes engines 614, for example. Optionally, the propulsion system 612 may include more engines 614 than shown. The engines 614 are carried by wings 616 of the aircraft 600. In other examples, the engines 614 may be carried by a fuselage 618 and/or an empennage 620. The empennage 620 may also support horizontal stabilizers 622 and a vertical stabilizer 624. The fuselage 618 of the aircraft 600 defines an internal cabin 630, which includes a flight deck or cockpit, one or more work sections (for example, galleys, personnel carry-on baggage areas, and the like), one or more passenger sections (for example, first class, business class, and coach sections), one or more lavatories, and/or the like. Referring to Figures 1-7, examples of the present disclosure can be used during manufacture of various portions of the aircraft 600. For example, skins of wings are components that are secured to other internal components, such as spars, ribs, and the like.

Figure 7 shows an example of an aircraft 600. It is to be understood that the aircraft 600 can be sized, shaped, and configured differently than shown in Figure 7. Optionally, examples of the present disclosure can be used with various other vehicles. For example, instead of an aircraft, the vehicle can be a land-based vehicle, such as an automobile, a bus, a train car, or the like. As another example, the vehicle can be a watercraft. As another example, the vehicle can be a spacecraft. Optionally, examples of the present disclosure can be used with fixed structures, such as residential or commercial buildings.

Further, the disclosure comprises examples according to the following clauses:
Clause 1. A system comprising:
   a control unit configured to:
   receive one or more force signals from one or more force sensors coupled to one or both of a tool or an end effector, wherein the one or more force signals are indicative of one or more forces exerted in relation to the tool or the end effector as the tool operates on one or more components, and
   classify a status of an operative portion of the tool based on the one or more forces.
Clause 2. The system of Clause 1, wherein the control unit is further configured to predict a remaining life of the operative portion based on the one or more forces.
Clause 3. The system of Clauses 1 or 2, further comprising one or both of the tool or the end effector.
Clause 4. The system of any of Clauses 1-3, wherein the tool is a drill.
Clause 5. The system of any of Clauses 1-4, wherein the control unit is further configured to train a machine learning model based on force data stored within a memory.
Clause 6. The system of Clause 5, wherein the control unit is further configured to classify the status of the operative portion of the tool by using the machine learning model.
Clause 7. The system of Clauses 5 or 6, wherein the control unit is further configured to refine the machine learning model based on the one or more signals received from the one or more force sensors.
Clause 8. The system of any of Clauses 1-7, wherein the control unit is an artificial intelligence or machine learning system.
Clause 9. The system of any of Clauses 1-8, wherein the control unit comprises an artificial neural network.
Clause 10. The system of any of Clauses 1-9, further comprising a user interface having a display, wherein the control unit is further configured to show information regarding the status of the operative portion on the display.
Clause 11. A method comprising:
   receiving, by a control unit, one or more force signals from one or more force sensors coupled to one or both of a tool or an end effector, wherein the one or more force signals are indicative of one or more forces exerted in relation to the tool or the end effector as the tool operates on one or more components; and
   classifying, by the control unit, a status of an operative portion of the tool based on the one or more forces.
Clause 12. The method of Clause 11, further comprising predicting, by the control unit, a remaining life of the operative portion based on the one or more forces.
Clause 13. The method of Clauses 11 or 12, wherein the tool is a drill.
Clause 14. The method of any of Clauses 11-13, further comprising training, by the control unit, a machine learning model based on force data stored within a memory.
Clause 15. The method of Clause 14, wherein said classifying comprises using the machine learning model.
Clause 16. The method of Clauses 14 or 15, further comprising refining, by the control unit, is the machine learning model based on the one or more signals received from the one or more force sensors.
Clause 17. The method of any of Clauses 11-16, wherein the control unit is an artificial intelligence or machine learning system.
Clause 18. The method of any of Clauses 11-17, wherein the control unit comprises an artificial neural network.
Clause 19. The method of any of Clauses 11-18, further comprising showing, by the control unit, information regarding the status of the operative portion on a display of a user interface.
Clause 20. A system comprising:
   a tool having an operative portion;
   one or more force sensors coupled to one or both of the tool or an end effector, wherein the one or more sensors are configured to output one or more force signals indicative of one or more forces exerted in relation to the tool or the end effector as the tool operates on one or more components;
   a user interface having a display; and
   a control unit configured to:
      train a machine learning model based on force data stored within a memory,
      receive the one or more force signals from the one or more force sensors,
      classify, by using the machine learning model, a status of an operative portion of the tool based on the one or more forces,
      predict a remaining life of the operative portion based on the one or more forces,
      refine the machine learning model based on the one or more signals received from the one or more force sensors, and
      show information regarding the status and the remaining life of the operative portion on the display.

As described herein, examples of the present disclosure provide efficient, effective, and accurate systems and methods for detecting quality of a tool, such as a drill, during a manufacturing process.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system (100) comprising:
a control unit (122) configured to:
receive one or more force signals (130) from one or more force sensors (120) coupled to one or both of a tool (102) or an end effector (106), wherein the one or more force signals (130) are indicative of one or more forces exerted in relation to the tool (102) or the end effector (106) as the tool (102) operates on one or more components (110), and
classify a status of an operative portion (104) of the tool (102) based on the one or more forces.

2. The system (100) of claim 1, wherein the control unit (122) is further configured to predict a remaining life of the operative portion (104) based on the one or more forces.

3. The system (100) of claim 1 or claim 2, further comprising one or both of the tool (102) or the end effector (106).

4. The system (100) of any of claims 1 to 3, wherein the tool (102) is a drill.

5. The system (100) of any of claims 1 to 4, wherein the control unit (122) is further configured to train a machine learning model based on force data stored within a memory (128).

6. The system (100) of claim 5, wherein the control unit (122) is further configured to classify the status of the operative portion (104) of the tool (102) by using the machine learning model.

7. The system (100) of claim 5 or claim 6, wherein the control unit (122) is further configured to refine the machine learning model based on the one or more signals received from the one or more force sensors (120).

8. The system (100) of any of claims 1 to 7, wherein the control unit (122) is an artificial intelligence or machine learning system (100).

9. The system (100) of any of claims 1 to 8, wherein the control unit (122) comprises an artificial neural network.

10. The system (100) of any of claims 1 to 9, further comprising a user interface (124) having a display (126), wherein the control unit (122) is further configured to show information regarding the status of the operative portion (104) on the display (126).

11. A method comprising:
receiving, by a control unit (122), one or more force signals (130) from one or more force sensors (120) coupled to one or both of a tool (102) or an end effector (106), wherein the one or more force signals (130) are indicative of one or more forces exerted in relation to the tool (102) or the end effector (106) as the tool (102) operates on one or more components (110); and
classifying, by the control unit (122), a status of an operative portion (104) of the tool (102) based on the one or more forces.

12. The method of claim 11, further comprising predicting, by the control unit (122), a remaining life of the operative portion (104) based on the one or more forces, and/or,
wherein the tool (102) is a drill.

13. The method of claim 11 or claim 12, further comprising training, by the control unit (122), a machine learning model based on force data stored within a memory (128), optionally, wherein said classifying comprises using the machine learning model, and/or, further comprising refining, by the control unit (122), the machine learning model based on the one or more signals received from the one or more force sensors (120).

14. The method of any of claims 11 to 13, wherein the control unit (122) is an artificial intelligence or machine learning system (100), and/or, wherein the control unit (122) comprises an artificial neural network, and/or, further comprising showing, by the control unit (122), information regarding the status of the operative portion (104) on a display (126) of a user interface (124).

15. A system (100) comprising:
a tool (102) having an operative portion (104);
one or more force sensors (120) coupled to one or both of the tool (102) or an end effector (106), wherein the one or more sensors are configured to output one or more force signals (130) indicative of one or more forces exerted in relation to the tool (102) or the end effector (106) as the tool (102) operates on one or more components (110);
a user interface (124) having a display (126); and
a control unit (122) configured to:
train a machine learning model based on force data stored within a memory (128),
receive the one or more force signals (130) from the one or more force sensors (120),
classify, by using the machine learning model, a status of an operative portion (104) of the tool (102) based on the one or more forces,
predict a remaining life of the operative portion (104) based on the one or more forces,
refine the machine learning model based on the one or more signals received from the one or more force sensors (120), and
show information regarding the status and the remaining life of the operative portion (104) on the display (126).
